(19) Europäisches Patentamt / European Patent Office / Office européen des brevets

(11) EP 1 955 453 B1

(12) EUROPEAN PATENT SPECIFICATION

(45) Date of publication and mention
of the grant of the patent:
**19.08.2009 Bulletin 2009/34**

(51) Int Cl.:
**H04B 10/08** (2006.01)

(21) Application number: **06809868.0**

(22) Date of filing: **14.11.2006**

(86) International application number:
**PCT/IL2006/001312**

(87) International publication number:
**WO 2007/063533 (07.06.2007 Gazette 2007/23)**

(54) **METHOD AND SYSTEM FOR MEASURING AVERAGE Q-FACTOR IN OPTICAL NETWORKS**

VERFAHREN UND SYSTEM ZUR MESSUNG DES MITTLEREN Q-FAKTORS IN OPTISCHEN NETZWERKEN

PROCEDE ET SYSTEME PERMETTANT DE MESURER UN FACTEUR DE QUALITE MOYEN DANS DES RESEAUX OPTIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.12.2005 IL 17230105**

(43) Date of publication of application:
**13.08.2008 Bulletin 2008/33**

(73) Proprietor: **ECI Telecom Ltd.**
**Petach-Tikva 49517 (IL)**

(72) Inventor: **MAHLAB, Uri**
**60414 Or Yehuda (IL)**

(74) Representative: **Modiano, Micaela Nadia**
**Modiano Josif Pisanty & Staub Ltd**
**Thierschstrasse 11**
**80538 München (DE)**

(56) References cited:
**EP-A2- 1 276 253        WO-A-20/04073244**

- **HANIK N ET AL: "Application of amplitude histograms to monitor performance of optical channels" ELECTRONICS LETTERS, IEE STEVENAGE, GB, vol. 35, no. 5, 4 March 1999 (1999-03-04), pages 403-404, XP006011890 ISSN: 0013-5194**
- **SHAKE I ET AL: "AVERAGED Q-FACTOR METHOD USING AMPLITUDE HISTOGRAM EVALUATION FOR TRANSPARENT MONITORING OF OPTICAL SIGNAL-TO-NOISE RATIO DEGRADATION IN OPTICAL TRANSMISSION SYSTEM" JOURNAL OF LIGHTWAVE TECHNOLOGY, IEEE SERVICE CENTER, NEW YORK, NY, US, vol. 20, no. 8, August 2002 (2002-08), pages 1367-1376, XP001226377 ISSN: 0733-8724**

## Description

### Field of the invention

The invention relates to a technology for determining average value of Quality factor (Q- factor) for signals transmitted via optical communication links.

### Background of the invention

The Q-factor is a parameter that directly reflects the quality of a digital optical communications signal. The higher the Q-factor, the better the quality of the optical signal. Q-factor measurement is related to the analogue signal and in this respect differs from bit error rate (BER) tests. As the Q-factor is related to the analogue signal, it gives a measure of the propagation impairments caused by optical noise, non-linear effects, polarization effects and chromatic dispersion. The mathematical definition of the Q-factor (Q) is the signal-to-noise ratio of the analogue signal; in a real system, Q can be determined based on Bit Error Rate (BER) using equation (1):

$$BER = \tfrac{1}{2}\, erfc\, (Q/\sqrt{2}) \qquad\qquad (1)$$

The Q-factor can be measured separately for each transmission channel assigned to a single transmission signal. Q-factor measurement methods are usually intended for the purposes of manufacturing, installation, optimization, maintenance and troubleshooting, and monitoring of an optical transmission network.

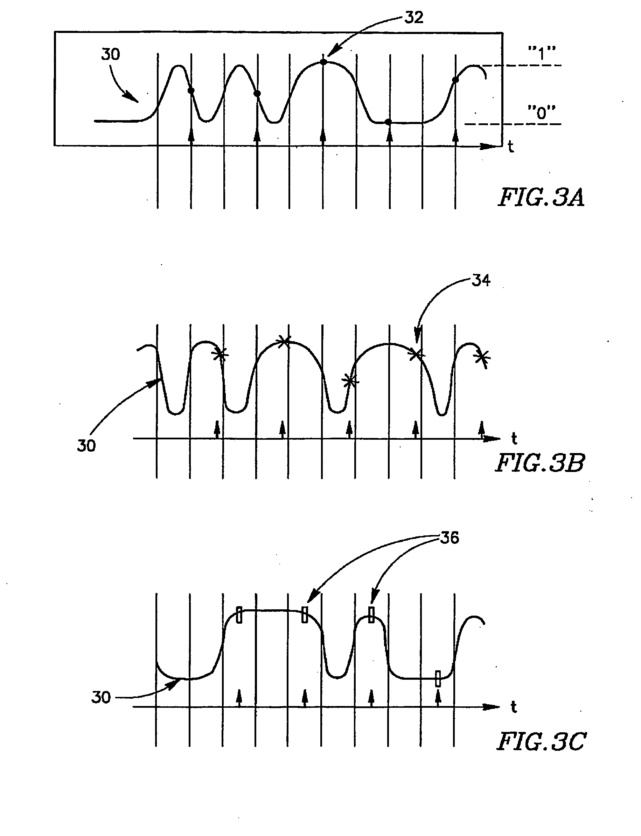

US 2004/0218919 describes a system, method and apparatus for monitoring impairment related parameters such as Q-factor within an all-optical system by using forward error correction (FEC) to derive a bit error rate (BER), which BER is used to determine the impairment related parameters. The Q factor determination process is illustrated in Fig. 3 depicting bit error rate plotted as a function of decision threshold level in Volts.

US 2005/0152693 proposes a technique for Q-factor measurement for per-channel power control in an optical transmission network, by injection of a dummy signal into the optical transmission network in addition to the communications signals, with the dummy signal being controllable with regard to its power, and determination of a channel-average Q-factor using BER measurements.

A Committee Draft of the International Electrotechnical Commission numbered IEC 61280-2-11 Ed 1.0 (dated 23.07.2004) describes averaged Q-factor determination using amplitude histogram evaluation for optical signal quality monitoring. It is pointed out that when a system's BER is too low to be measured within a reasonable length of time, it is useful to adopt Q-factor measurements. However, all sampling-based methods require synchronization and then some analysis, i.e., require complex equipment as in the BER measurement. Therefore a relatively simple asynchronous histogram method was developed for Q-factor measurement. Average Q-factor ($Q_{avg}$) measurement through asynchronous sampling is a cost effective alternative to BER measurements.

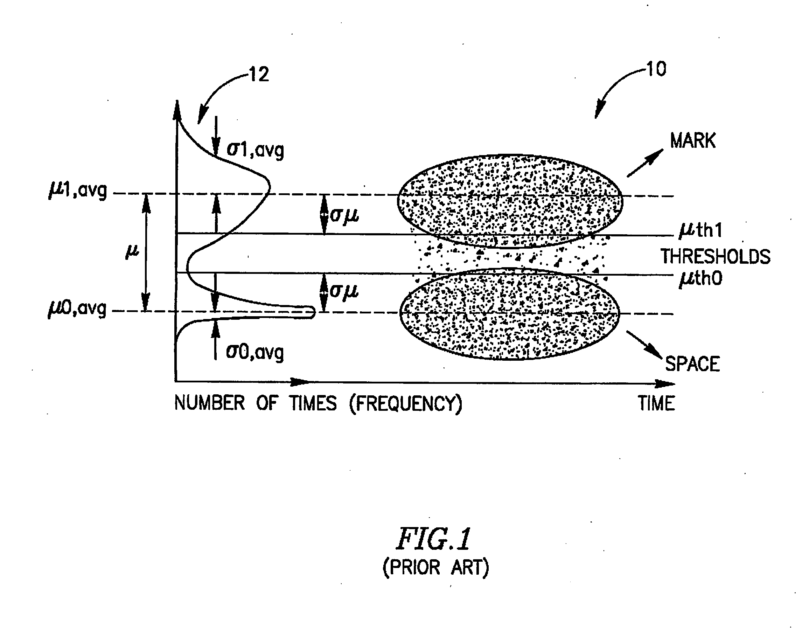

**Fig. 1** reproduces the corresponding figure of the Committee Draft which presents a typical eye-pattern (10) of a high bit rate binary optical signal and its amplitude histogram 12, built using asynchronous optical sampling of the optical signal. It is determined, that among the amplitude sampling points that compose the histogram, those points whose level is higher than a predetermined threshold level, $\mu_{th1}$, belong to level "Mark"(or "1"), while those points whose level is lower than a predetermined threshold level, $\mu_{th0}$, belong to level "Space" (i.e., "0"). The averaged Q-factor $Q_{avg}$ is defmed by the following formula (2):

$$Q_{avg} = |\mu_{1\,avg} - \mu_{0\,avg}| / (\sigma_{1,\,avg} + \sigma_{0,\,avg}) \qquad\qquad (2)$$

Where" $\mu_{i,\,avg}$ " and " $\sigma_{i,\,avg}$ " are the mean and standard deviations of the Mark (i=1), and Space level (i=0) distributions, respectively. The data obtained by asynchronous sampling includes unwanted cross-point data in the eye-diagram, which decreases the measured value of the averaged Q factor. The two threshold levels ($\mu_{th1}$ and $\mu_{th0}$) are set in order to remove the cross-point data. They may also serve thresholds of sensitivity for distinguishing "0" and "1" digital values.

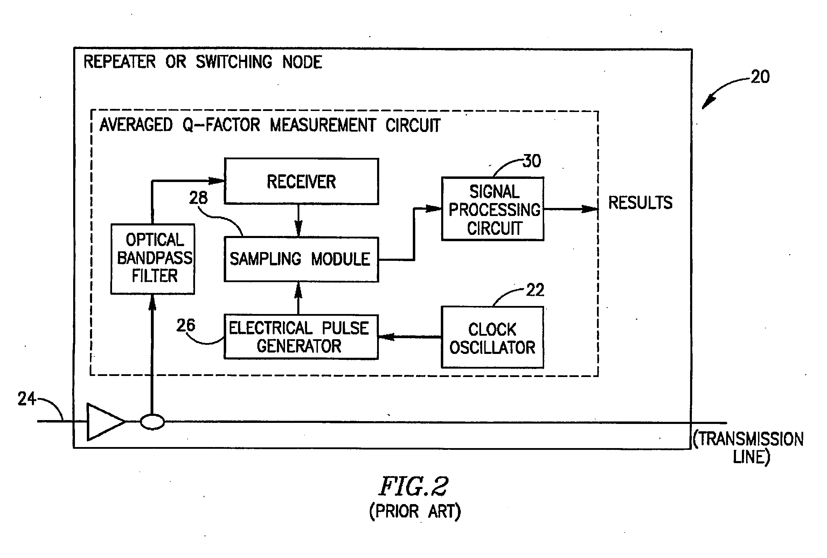

**Fig. 2** presents a block diagram shown in Fig. 2 of the above-mentioned Committee Draft, recommending a system 20 for asynchronous measurement of the averaged Q-factor, $Q_{avg}$, of an optical signal transmitted via line 24. Operations of sampling the optical signal, and the histogram-based processing of the samples are performed according to clock signals of a clock oscillator 22. The clock signal is not synchronized to the optical signal in the transmission line 24, and is sent to both a sampling module 28 via an electrical pulse generator 26, and to a signal processing circuit 30. The repetition rate of the electrical pulse train is to be consistent with the sampling rate. The sampling module shall sample the optical signals at a specified repetition rate with a specified sampling window by using an electrical pulse train generated with an electrical pulse generator and detect the level of the sampled signals. The sampled values are sent to the signal processing circuit. The accuracy of $Q_{avg}$ depend on the sampling window (specified sampling time width).

The method of processing further includes utilizing tables that present preliminarily obtained correlation of the $Q_{avg}$ with the absolute or theoretical value of Q or BER.

US 2003/0011837 discloses a monitoring system using the above-mentioned method of histograms. It includes first and second evaluation sections for obtaining an averaged Q-factor parameter and a waveform distortion parameter from an optical signal amplitude histogram collected from optical signals under measurement. The monitoring system further includes a third evaluation section for determining both the averaged Q-factor parameter and waveform distortion parameter, and for making a decision as to whether the main factor of the optical signal quality degradation is some waveform distortion or not by comparing the averaged Q-factor parameter and waveform distortion parameter with their initial values or initial characteristics which are obtained when no optical signal quality degradation is present. Comparison of a number of the Q factor measurements are proposed for diagnosing appearance of a quality degradation.

Though the asynchronous sampling technology is more economic, it definitely suffers from inaccuracy in comparison with quite expensive techniques of synchronized measurements of Q-factor. Still it remains quite complex since it involves a statistical algorithm with further multistage processing.

## Summary of the invention

It is therefore the object of the present invention to propose a technology for average Q-factor measurement, being both relatively simple and rather accurate.

The above object can be achieved using a technique for determining averaged Q-factor (Qavg) of an optical binary signal transmitted at a bit rate X, based on amplitude histogram evaluation and on asynchronous sampling. The proposed technique is inexpensive since it uses sampling pulses, which have bit rate Y lower than X and are not synchronized with the optical signal. The technique proposes conducting N sampling sessions and constructing N respective amplitude histograms for the sessions, wherein an initial session is conducted at a randomly selected initial phase of the sampling pulses, and N-1 sessions are held at different phases shifted in respect of the initial phase. The technique then compares the obtained N amplitude histograms to select there-from the amplitude histogram having the minimal cumulative value of cross-point data. The averaged Q-factor is determined from the selected histogram, with accuracy comparable with that of synchronous methods.

Formally, there is proposed a method of determining averaged Q-factor ($Q_{avg}$) for an optical binary signal transmitted via an optical communication line at a bit rate X, based on amplitude histogram evaluation and asynchronous sampling, the method comprising:

a) providing sampling pulses having bit rate Y lower than X and not synchronized with the optical signal, and applying the sampling pulses to the optical signal at a randomly selected initial phase, during a pre-selected sampling session;
b) measuring amplitude values of the optical signal at moments of time defined by the sampling pulses during the pre-selected sampling session;
c) building an amplitude histogram using the amplitude values obtained at step (b), said amplitude histogram comprising at least two peaks and among them two extremely positioned peaks corresponding to two average levels "1" and "0" of the optical binary signal, the amplitude histogram also comprising cross-point data between said two extremely positioned peaks;
d) shifting phase of the sampling pulses;
e) repeating steps b), c), d) N-1 number of times thereby obtaining N amplitude histograms for N respective different phases of the sampling pulses;
f) comparing the obtained N amplitude histograms and selecting there-from such an amplitude histogram where a cumulative value of the cross-point data is minimal;
g) determining a value of $Q_{avg}$ for the histogram selected at step (f).

The value $Q_{avg}$ is determined conventionally, according to equation (2).

The cumulative value of the cross-point data should be understood as a sum (the integral) of all frequency values under the histogram curve between said two levels of amplitude. Said two levels may respectively correspond to $\mu_{1\,avg}$ and $\mu_{0\,avg}$.

In a slightly differing version of the method, said two levels may respectively correspond to $\mu_{th1}$ and $\mu_{th0}$.

The threshold level definitions are equal to those in the Committee Draft of the International Electrotechnical Commission numbered IEC 61280-2-11 Ed 1.0 dated 23.07.2004, which is incorporated herein by reference.

Actually, the method proposes considering the value of $Q_{avg}$ determined at step (g) to be the most accurate one for the asynchronous sampling at the selected bit rate of the sampling pulses and the selected sampling session's period, since the determined $Q_{avg}$ value is maximally close to a value of $Q_{avg}$ would it be determined by synchronous sampling.

Indeed, one of the asynchronous sets of measurements at a particular phase of the sampling signals will inevitably be applied to the optical signal at such a phase, which will result in the sampling of the optical signal at positions closer to the center of its bit pulse period, than it would occur at other sets of measurements. The specific histogram built on such a set of measurements (obtained at the mentioned particular phase) will definitely have the cumulative cross-point data lower than other asynchronously obtained histograms. It is therefore understood why the determined $Q_{avg}$ value for such a phase of asynchronous sampling pulses is maximally close to a value of $Q_{avg}$, would it be determined by a method of synchronous sampling.

In other words, the method proposes real time shifting of the beginning point of the sample (probe) session, building histograms for each such phase shift, selecting the most characteristic histogram from the point of minimal cumulative cross-point data, and further computing the average Q-factor ($Q_{avg}$) so as to finally find the best signal to noise ratio which will manifest the measurement maximally close to that which could be made by a synchronous sampling method.

Preferably, the bit rate Y of the sampling pulses is selected as Y=X/k, where k is an integer.

Further preferably, in step (d), the phase shift is made for a non-integer number of bit durations of the optical signal. It would be desired to be made "within the duration of a bit pulse" of the optical signal, while it is understood that, in practice, the phase shift of the asynchronous low bit rate sampling pulses will always comprise more than one bit durations of the optical signal. Therefore the condition is to make a phase shift for a non-integer number of the bit durations of the optical signal: the new phase should differ from the previous phase by $\Delta = qT_b + D$, wherein q is an integer, $T_b$ is the duration of a bit of the optical signal and D is a mathematical fraction of $T_b$.

The fraction D of the bit duration is preferably not equal and not proportional to a half of the bit duration, i.e., $D=( p*T_b)/m$, where p and m are integers, p=0...m-1; m>2.

Alternatively, the phase shift can be performed by introducing controllable jitter in the optical system (say, in the optical signal or in the sampling pulses), thereby obtaining relative phase shift of the sampling pulses.

One preferred embodiment of the method may comprise:

- gradually changing the phase of the sampling pulses in a discrete manner N times,
- building N said histograms for each discrete phase of the sampling pulses;
- computing the cumulative value of the cross-point data for each of the N obtained histograms;
- selecting the histogram, having the minimal cumulative value of the cross-point data, for determining $Q_{avg}$;
- determining the $Q_{avg}$ according to equation (2).

According to a second aspect of the invention, there is also provided a system for implementing the above-defined method.

The system, for example, can be defined as a system for determining averaged Q-factor $Q_{avg}$ for an optical binary signal transmitted via an optical communications line at a bit rate X, based on amplitude histogram evaluation and asynchronous sampling, and comprising:

a medium for conducting the binary optical signal having bit rate X,
a generator of asynchronous sample pulses having bit rate Y less than X,
a sampling assembly for measuring amplitude values of the binary optical signal at moments of time manifested by said sample pulses during a pre-selected period of sampling session (or based on a pre-selected number of sample pulses),
means for controlled phase shifting of the sample pulses upon expiration of the period of sampling session (or the number of sampling pulses),
a processing means for building and storing amplitude histograms of the binary optical signal per each specific phase of the sample pulses corresponding to the predetermined sampling session period (or said number of sample pulses);
said processing means being also capable of
calculating and comparing cumulative values of cross-point data of the amplitude histograms built for different phases of the sample pulses, and
determining average Q-factor $Q_{avg}$ based on the histogram having the minimal cumulative value of the cross-point data.

The generator of sampling pulses may have controllable bit rate.

The means for the controlled phase shifting of the sample pulses preferably comprises a generator of clocks having bit rate Y, and a controllable assembly of one or more delay lines connectable in various combinations between the output of the generator of clocks and the input of the generator of sample pulses.

The means for the controlled phase shifting of the sample pulses can be adapted, for example, to periodically shift the phase of the sample pulses generated by their generator for a non-integer number of bit durations of the optical binary signal.

Alternatively, the above-mentioned means may comprise the clock generator modulated by a jitter source, which can be controllable.

## Description of the drawings.

The invention will further be described with reference to the following nonlimiting drawings in which:

Fig. 1 (prior art) is an illustration of a typical asynchronous eye-pattern and its amplitude histogram obtained by asynchronous optical sampling.

Fig. 2 (prior art) is a diagram of a system for asynchronous measurement of $Q_{avg}$ using the histogram shown in Fig. 1.

Fig. 3 a, b, c illustrate three simplified different time diagrams of a binary optical signal passing via an optical communications line and being sampled by lower bit rate sampling pulses at three different phases.

Fig. 4 a, b, c, d, e, f illustrate amplitude histograms practically obtained for a binary signal sampled at different phases of sampling pulses, according to the method proposed by the invention.

Fig. 5 is an exemplary block diagram of a system capable of performing the sampling and the processing according to the inventive method.

## Detailed description of the preferred embodiments

Figs 3a, b, c can be understood as a general illustration of a method known as asynchronous sampling.

Fig. 3a shows a binary optical signal 30 which, while being initially a digital signal with distinctive power levels of "1" and "0", has become an analog-like quasi - sinusoidal signal upon passing an optical link and suffering from such effects as chromatic dispersion, non-linearity, etc. Let the bit rate X of the binary signal 30 is quite high, (say, measured in Gb/s). Asynchronous sampling of such a signal is proposed to be done by sample pulses having much lower bit rate Y. It should be noted that equipment for sampling optical signals at low bit rates is significantly simpler and cheaper than analogous equipment working at modem high bit rates. In this drawing, the bit rate of the sample pulses is shown only twice as low (see circles 32 indicating the timing of the sample pulses with respect to the diagram 30 of the binary optical signal). Random asynchronous sampling may give inadequate results, since the sampled portions of the optical signal may occur to be placed between bits thereof, and will therefore belong to the transition portions of the signal (i.e., those between the high level "0" and the low level "1" of the signal). Fig. 3a shows such a typical non-synchronized case.

Fig. 3b illustrates the progressing optical signal 30 having the same bit rate X (the drawing shows a different binary succession of the signal). As proposed by the invention, the signal 30 is sampled by the sampling pulses having the mentioned bit rate Y; however, the sample pulses (marked by stars 34 on the optical signal 30) are shifted by phase with reference to the initial phase of sample pulses 32 in Fig. 3a. Though the sampling pulses 34 also fall on transition portions of the signal, they occur to be closer to the center of bit durations of the signal 30.

Fig. 3c shows yet another phase of sampling pulses with respect to the optical signal 30. Now the sampling pulses 36 (marked with vertical strips on the signal 30) occur to be located quite close to the center of the bit positions of the optical signal, and thus actually approach to becoming the synchronized sampling pulses.

It should be noted that the above three time diagrams should be understood as simplified examples only. The bit rate Y of the sample pulses may be much lower than the bit rate X of the optical signal, the ratio X/Y may constitute any arbitrary number, the number and value of phase shifts may vary. It is therefore never known in advance, which of the phase shifts will present the sampling most similar to the synchronized sampling, and thus the statistical processing is required, using amplitude histograms and selecting there-from the one having the minimal cumulative cross-point data for calculating the most accurate $Q_{avg}$.

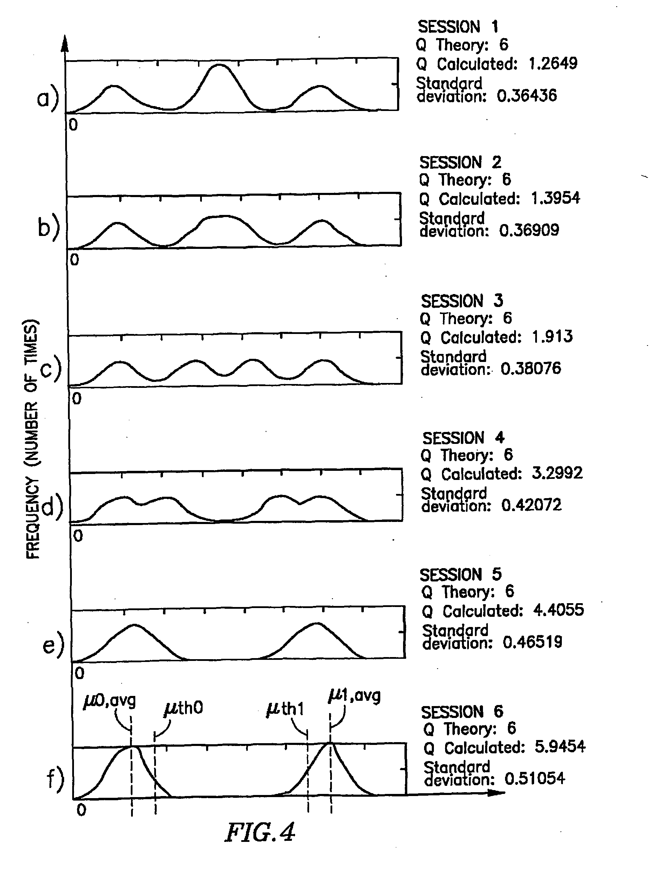

Fig. 4 a, b, c, d, e f are presented to illustrate the inventive idea and show six amplitude histograms built for a binary optical signal sampled at six sampling sessions. The six histograms 4a-4f are built for these six sampling sessions which are performed at respective six different, randomly selected phases of sampling pulses. Each of these statistic amplitude histograms was conventionally built using data about values of the optical binary signal at the time of sampling pulses. The horizontal axis of the histograms presents values of the sampled binary signal, and the vertical axis presents frequency (or number of times) of appearance of the particular amplitude value during the sampling session. One should keep in mind that the sample pulses are not synchronized with the optical binary signal under investigation, and that phase of the sampling pulses changes each session.

The six experimental sampling sequences comprised each 50,000 sample pulses, the measuring (sampling) session therefore comprised 50,000 sample measurements. Each of the six statistical amplitude histograms shown in Figs. 4a - 4f is built using 50,000 readings of amplitude. The amplitude "1" on the horizontal axis means the level of the optical signal assigned to the logical "1". The amplitude "0" on the horizontal axis means the level of the optical signal assigned to the logical "0". These two levels respectively correspond to $\mu_{0\ avg}$ and $\mu_{1avg}$. Every value of the amplitude is considered with respect to a corresponding "1" or "0" threshold ($\mu_{th1}$ and $\mu_{th0}$, respectively).

Values of the vertical axis reflect the statistical frequency (number of times 1 to 50,000) at which the particular value of amplitude has been registered during one and the same sampling session.

The theoretical Q factor was preliminarily determined according to equation (1) for the optical signal under investigation, and it was equal to 6. It should be noted that BER to be used in the equation (1) was measured by the synchronous method of sampling.

For each of the histograms obtained by the proposed asynchronous method, $Q_{avg}$ was then calculated using formula (2). It has been shown in the experiment that the histograms a - d illustrate cases when the phase of the asynchronous sampling occurred to be drastically non synchronized with the bits of the optical signal. The histograms e and f (of sessions 5 and 6) look much more similar to a reasonable statistical reflection of a binary optical signal, and they indeed correspond to "lucky" phases of the sampling signals which are maximally close to the phase of the sampling pulses would they be synchronized. As has been shown in the experiment, the histogram "f" gives the best calculated value of $Q_{avg}$, which is maximally close to the theoretical Q. Among the six presented histograms, the 6th histogram "f" is characterized by the minimal cumulative cross-point data between the "0" and "1" binary levels of the amplitude. The presented six histograms serve the proof of the proposed method for determining $Q_{avg}$ of an optical signal by asynchronous sampling.

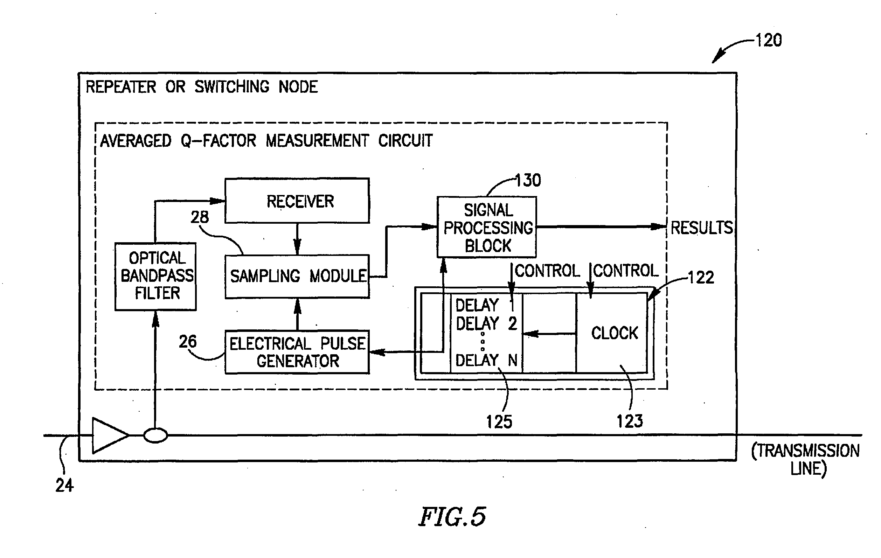

**Fig. 5** presents a block diagram of an exemplary system 120 for implementing the method according to the invention.

For example, the diagram can be similar to that in Fig. 2, wherein the clock oscillator block 22 of Fig. 2 is replaced with a controlled clock oscillator block 122 comprising a clock oscillator 123 and a delay block 125. The signal processing circuit 30 is replaced with a processing block 130.

In the new block 122, the bit rate of the clock 123 can be controllable, and the phase thereof is definitely controllable - with the aid of the controllable delay block 125. The controlled phase of the clock will further become the shifted phase of sampling pulses issued from the electrical pulse generator 26. According to the embodiment proposed in this drawing, the phase of the clock can be changed by selecting various delay circuits (say, lines or the like within the controllable block 125), to be connected to the output of the clock 123. Each specific delay circuit/delay circuit combination corresponds to a particular phase of the sampling pulses, which is assigned to a particular asynchronous measuring session for determining $Q_{avg}$. It is desired that the smallest delay difference which can be provided by a delay circuit or a combination thereof be $T_b/m$, where $T_b$ is the bit duration of the binary optical signal, and m is integer >2. The sampling module 28 measures amplitude of the optical signal whenever sampling pulses are sent from the generator 26. Upon obtaining and storing the readings obtained from the sampling module 28 for each of the sessions, the processing block 130 constructs an amplitude histogram for each of the sessions, and determines the histogram with the minimal cumulative cross-point data between two extremely located peaks of the particular histogram. The block 130 also calculates $Q_{avg}$ for each of the histograms and then picks the value of $Q_{avg}$ of the histogram with the minimal cumulative cross-point data as the most accurate value of $Q_{avg}$ for the optical signal in the communication line 24.

Other implementations can be proposed for the above-described asynchronous method of determining $Q_{avg}$, as well as other versions of the method could be developed. It should be appreciated that such versions and implementations should be considered part of the invention, which is defined by the claims which follow.

**Claims**

1.  A method for determining averaged Q-factor, $Q_{avg}$, for an optical binary signal transmitted via an optical communications line at a bit rate X, based on amplitude histogram evaluation and asynchronous sampling, the method comprising:

    a) providing sampling pulses having bit rate Y lower than X and not synchronized with the optical signal, and applying the sampling pulses to the optical signal at a randomly selected initial phase, during a pre-selected sampling session;
    b) measuring amplitude values of the optical signal at moments of time defined by the sampling pulses during the pre-selected sampling session;
    c) building an amplitude histogram using the amplitude values obtained at step (b), said amplitude histogram comprising at least two peaks and among them two extremely positioned peaks corresponding to two average levels "1" and "0" of the optical binary signal, the amplitude histogram also comprising cross-point data between said two extremely positioned peaks;
d) shifting phase of the sampling pulses;
e) repeating steps b), c), d) N-1 number of times thereby obtaining N amplitude histograms for N respective different phases of the sampling pulses;
f) comparing the obtained N amplitude histograms and selecting there-from such an amplitude histogram where a cumulative value of the cross-point data is minimal;
g) determining a value of $Q_{avg}$ for the histogram selected at step (f).

2. The method according to Claim 1, wherein the cumulative value of the cross-point data is the integral of frequency values under the histogram curve between said two levels of amplitude, respectively corresponding to $\mu_{1\ avg}$ and $\mu_{0\ avg}$.

3. The method according to Claim 1, wherein the cumulative value of the cross-point data is the integral of frequency values under the histogram curve between said two levels of amplitude, respectively corresponding to $\mu_{th1}$ and $\mu_{th0}$.

4. The method according to any one of Claims 1 to 3, wherein the bit rate Y of the sampling pulses is selected as Y=X/k, where k is an integer.

5. The method according to any one of Claims 1 to 4, wherein step (d) is performed by introducing controllable jitter, thereby obtaining relative phase shift of the sampling pulses.

6. The method according to any one of Claims 1 to 5, comprising, in step (d), shifting the phase of sampling pulses for $\Delta$ being a non-integer number of bit durations of the optical signal, so that $\Delta = qT_b + D$, wherein q is an integer, $T_b$ is the duration of a bit of the optical signal, and D is a fraction of $T_b$.

7. The method according to Claim 6, wherein $D = (p*T_b)/m$, where p and m are integers, p=0...m-1; m>2.

8. The method according to Claim 7, comprising gradually changing the phase of the sampling pulses in a discrete manner.

9. A system for determining averaged Q-factor $Q_{avg}$ for an optical binary signal transmitted via an optical communications line (24) at a bit rate X, based on amplitude histogram evaluation and asynchronous sampling, the system comprising:

   a medium conducting the binary optical signal having bit rate X,
   a generator (26) of sample pulses having bit rate Y less than X,
   a sampling assembly (28) for measuring amplitude values of the binary optical signal at moments of time manifested by said sample pulses during a pre-selected period of sampling session,
   means (122) for controlled phase shifting of the sample pulses upon expiration of the period of sampling session,
   a processing means (130) for building and storing amplitude histograms of the binary optical signal per each specific phase of the sample pulses corresponding to the predetermined sampling session period;
   said processing means (130) being also capable of
   calculating and comparing cumulative values of cross-point data of the amplitude histograms built for different phases of the sample pulses, and
   determining average Q-factor $Q_{avg}$ based on the histogram having the minimal cumulative value of the cross-point data.

10. The system according to Claim 9, wherein the means (122) for the controlled phase shifting of the sample pulses comprises a generator (123) of clocks having bit rate Y, and a controllable assembly (125) of one or more delay circuits connectable in various combinations between the output of the generator of clocks and the input of the generator of sample pulses.

11. The system according to Claim 9, wherein the means (122) for the controlled phase shifting of the sample pulses comprises a generator of clocks (123) having bit rate Y, and modulated by jitter.

12. The system according to any one of Claims 9 to 11, wherein the generator (26) of sampling pulses has controllable bit rate.

**Patentansprüche**

1. Ein Verfahren zur Bestimmung eines gemittelten Q-Faktors, $Q_{avg}$, für ein optisches binäres Signal, das mit einer Bitrate X über eine optische Übertragungsleitung gesendet wird, und zwar basierend auf Amplituden-Histogrammauswertung und asynchroner Abtastung, wobei das Verfahren Folgendes umfasst:

   a) Bereitstellung von Abtastimpulsen mit einer Bitrate Y, die niedriger als X ist und nicht mit dem optischen Signal synchronisiert ist, und Anlegung der Abtastimpulse an das optische Signal mit einer willkürlich ausgewählten Anfangsphase während einer im Voraus ausgewählten Abtastsitzung,
   b) Messung von Amplitudenwerten des optischen Signals zu Zeitpunkten, die von den Abtastimpulsen während der im Voraus ausgewählten Abtastsitzung bestimmt werden,
   c) Erstellung eines Amplituden-Histogramms unter Verwendung der Amplitudenwerte, die in Schritt (b) erhalten wurden, wobei das Amplituden-Histogramm mindestens zwei Spitzen und unter ihnen zwei extrem positioniert Spitzen umfasst, die zwei Durchschnittspegel "1" und "0" des optischen binären Signals entsprechen, wobei das Amplituden-Histogramm auch Kreuzungspunkt-Daten zwischen den zwei extrem positionierten Spitzen umfasst;
   d) Verschiebung der Phase der Abtastimpulse,
   e) Wiederholung der Schritte b), c), d) N-1mal, wodurch N Amplituden-Histogramme für N verschiedene entsprechende Phasen der Abtastimpulse erhalten werden,
   f) Vergleich der N erhaltenen Amplituden-Histogramme und Auswahl eines derartigen Amplituden-Histogramms daraus, in dem ein kumulativer Wert der Kreuzungspurikt-Daten minimal ist,
   g) Bestimmung eines Werts von $Q_{avg}$ für das in Schritt (f) ausgewählte Histogramm.

2. Das Verfahren gemäß Anspruch 1, wobei der kumulative Wert der Kreuzungspunkt-Daten das Integral von Frequenzwerten unter der Histogramm-Kurve zwischen den zwei Pegel der Amplitude ist, die $\mu_{1avg}$ beziehungsweise $\mu_{0avg}$ entsprechen.

3. Das Verfahren gemäß Anspruch 1, wobei der kumulative Wert der Kreuzungspunkt-Daten das Integral von Frequenzwerten unter der Histogramm-Kurve zwischen den zwei Pegel der Amplitude ist, die $\mu_{th1}$ beziehungsweise $\mu_{th0}$ entsprechen.

4. Das Verfahren gemäß einem beliebigen der Ansprüche 1 bis 3, wobei die Bitrate Y der Abtastimpulse ausgewählt wird als Y=X/k, worin k eine ganze Zahl ist.

5. Das Verfahren gemäß einem beliebigen der Ansprüche 1 bis 4, wobei Schritt (d) durch Einführung eines steuerbaren Jitters durchgeführt wird, wodurch eine relative Phasenverschiebung der Abtastimpulse erreicht wird.

6. Das Verfahren gemäß einem beliebigen der Ansprüche 1 bis 5, das in Schritt (d) die Verschiebung der Phase von Abtastimpulsen umfasst, wobei $\Delta$ eine nicht ganzzahlige Zahl von Bitdauern des optischen Signals ist, so dass $\Delta = qT_b + D$, wobei q eine ganze Zahl ist, $T_b$ die Dauer eines Bits des optischen Signals ist und D eine Fraktion von $T_b$ ist.

7. Das Verfahren gemäß Anspruch 6, wobei $D = (p*T_b)/m$, worin p und m ganze Zahlen sind, p=0...m-1; m>2.

8. Das Verfahren gemäß Anspruch 7, das eine graduelle Änderung der Phase der Abtastimpulse auf diskrete Art und Weise umfasst.

9. Ein System zur Bestimmung eines gemittelten Q-Faktors $Q_{avg}$ für ein optisches binäres Signal, das mit einer Bitrate X über eine optische Übertragungsleitung (24) gesendet wird, und zwar basierend auf Amplituden-Histogrammauswertung und asynchroner Abtastung, wobei das System Folgendes umfasst:

   ein Medium, welches das binäre optische Signal mit der Bitrate X leitet,
   einen Generator (26) von Abtastimpulsen mit einer Bitrate Y kleiner als X,
   einen Abtastaufbau (28) zur Messung von Amplitudenwerte des binären optischen Signals zu Zeitpunkten, die von den Abtastimpulsen während eines im Voraus ausgewählten Zeitraums einer Abtastsitzung aufgewiesen werden,
   Mittel (122) zur gesteuerten Phasenverschiebung der Abtastimpulse bei Ablauf des Zeitraums der Abtastsitzung,
   ein Verarbeitungsmittel (130) zur Erstellung und Speicherung von Amplituden-Histogrammen des binären optischen Signals pro spezifischer Phase der Abtastimpulse, die dem vordefinierten Abtastsitzungs-Zeitraum entspricht,

wobei das Verarbeitungsmittel (130) auch in der Lage ist,

kumulative Werte von Kreuzungspunkt-Daten der Amplituden-Histogramme, die für verschiedene Phasen der Abtastimpulse erstellt wurden, zu berechnen und zu vergleichen, und

den gemittelten Q-Faktor $Q_{avg}$ zu bestimmen, basierend auf dem Histogramm, das den minimalen kumulativen Wert der Kreuzungspunkt-Daten hat.

**10.** Das System gemäß Anspruch 9, wobei das Mittel (122) für die gesteuerte Phasenverschiebung der Abtastimpulse einen Geber (123) von Takten mit einer Bitrate Y und eine steuerbare Gruppe (125) einer oder mehrerer Verzögerungsschaltungen umfasst, die in verschiedenen Kombinationen zwischen der Ausgabe des Taktgebers und der Eingabe des Generators von Abtastimpulsen angeschlossen werden können.

**11.** Das System gemäß Anspruch 9, wobei das Mittel (122) für die gesteuerte Phasenverschiebung der Abtastimpulse einen Geber (123) von Takten umfasst, mit einer Bitrate Y, und von Jitter moduliert.

**12.** Das System gemäß einem beliebigen der Ansprüche 9 bis 11, wobei der Generator (26) von Abtastimpulsen eine steuerbare Bitrate hat.

## Revendications

**1.** Procédé permettant de mesurer un facteur de qualité moyen, $Q_{avg}$, pour un signal binaire optique transmis via une ligne de communication optique, à un débit binaire X, d'après une évaluation faisant appel à un histogramme des amplitudes et un échantillonnage asynchrone, le procédé comprenant :

a) la fourniture d'impulsions d'échantillonnage ayant un débit binaire Y inférieur à X et non synchronisées avec le signal optique, et l'application des impulsions d'échantillonnage au signal optique, à une phase initiale sélectionnée de manière aléatoire, durant une session d'échantillonnage présélectionnée ;

b) la mesure de valeurs d'amplitude du signal optique, à des moments temporels définis par les impulsions d'échantillonnage durant la session d'échantillonnage présélectionnée ;

c) la construction d'un histogramme des amplitudes, en utilisant les valeurs d'amplitude obtenues à l'étape (b), ledit histogramme des amplitudes comprenant au moins deux pics et, parmi eux, deux pics positionnés de façon extrême, correspondant à deux niveaux moyens "1" et "0" du signal binaire optique, l'histogramme des amplitudes comprenant des données de point de croisement entre lesdits deux pics positionnés de façon extrême ;

d) le déphasage des impulsions d'échantillonnage ;

e) la répétition des étapes b), c), d) N-1 fois, de manière à obtenir N histogrammes des amplitudes pour N phases différentes respectives des impulsions d'échantillonnage ;

f) la comparaison des N histogrammes des amplitudes obtenus et, à partir de celle-ci, la sélection d'un histogramme des amplitudes dans lequel une valeur cumulative des données de point de croisement est minimale ;

g) la détermination d'une valeur de $Q_{avg}$ pour l'histogramme sélectionné à l'étape (f).

**2.** Procédé selon la revendication 1, dans lequel la valeur cumulative des données de point de croisement est l'intégrale des valeurs de fréquence situées au-dessous de la courbe d'histogramme, entre lesdits deux niveaux d'amplitude, correspondant respectivement à $\mu_{1avg}$ et à $\mu_{0avg}$.

**3.** Procédé selon la revendication 1, dans lequel la valeur cumulative des données de point de croisement est l'intégrale des valeurs de fréquence situées au-dessous de la courbe d'histogramme, entre lesdits deux niveaux d'amplitude, correspondant respectivement à $\mu_{th1}$ et à $\mu_{th0}$.

**4.** Procédé selon l'une quelconque des revendications 1 à 3, dans lequel le débit binaire Y des impulsions d'échantillonnage est sélectionné comme étant Y=X/k, dans laquelle k est un entier.

**5.** Procédé selon l'une quelconque des revendications 1 à 4, dans lequel ladite étape (d) est effectuée par introduction d'une gigue contrôlable, de manière à obtenir un déphasage relatif des impulsions d'échantillonnage.

**6.** Procédé selon l'une quelconque des revendications 1 à 5, comprenant, à l'étape (d), le déphasage de la valeur $\Delta$ des impulsions d'échantillonnage, soit un nombre non entier de durées de bits du signal optique, de manière que $\Delta=qT_b+D$, dans laquelle q est un entier, $T_b$ est la durée d'un bit du signal optique et D est une fraction de $T_b$.

7. Procédé selon la revendication 6, dans lequel $D=(p*T_b)/m$, dans laquelle p et m sont des entiers, p=0... m-1 ; m>2.

8. Procédé selon la revendication 7, comprenant le déphasage graduel des impulsions d'échantillonnage, d'une manière discrète.

9. Système permettant de mesurer un facteur de qualité moyen, $Q_{avg}$, pour un signal binaire optique transmis via une ligne de communication optique (24), à un débit binaire X, d'après une évaluation faisant appel à un histogramme des amplitudes et un échantillonnage asynchrone, le système comprenant :

un support conduisant le signal optique binaire ayant le débit binaire X,
un générateur (26) d'impulsions d'échantillonnage ayant un débit binaire Y inférieur à X,
un ensemble d'échantillonnage (28), pour mesurer des valeurs d'amplitude du signal optique binaire, à des moments temporels manifestés par lesdites impulsions d'échantillonnage durant une période présélectionnée de la session d'échantillonnage,
des moyens (122) pour obtenir un déphasage commandé des impulsions d'échantillonnage, à l'expiration de la période de la session d'échantillonnage,
des moyens de traitement (130), pour construire et stocker des histogrammes des amplitudes du signal optique binaire, pour chaque phase spécifique des impulsions d'échantillonnage correspondant à la période présélectionnée de session d'échantillonnage ;
lesdits moyens de traitement (130) étant également capables de calculer et de comparer des valeurs cumulatives des données de point de croisement des histogrammes des amplitudes construits pour différentes phases des impulsions d'échantillonnage, et
la détermination du facteur de qualité moyen $Q_{avg}$, d'après l'histogramme ayant la valeur cumulative minimale des données de point de croisement.

10. Système selon la revendication 9, dans lequel les moyens (122) pour produire le déphasage contrôlé des impulsions d'échantillonnage comprennent un générateur (123) de signaux horloge ayant un débit binaire Y, et un ensemble (125) contrôlable, composé d'un ou plusieurs circuits à retard, susceptible(s) d'être connecté(s), en différentes combinaisons, entre la sortie du générateur de signaux d'horloge et l'entrée du générateur des impulsions d'échantillonnage.

11. Système selon la revendication 9, dans lequel les moyens (122) de déphasage contrôlé des impulsions d'échantillonnage comprennent un générateur de signaux d'horloge (123) ayant un débit binaire Y et à modulation par une gigue.

12. Système selon l'une quelconque des revendications 9 à 11, dans lequel le générateur (26) d'impulsions d'échantillonnage présente un débit binaire contrôlable.

*FIG.1*
(PRIOR ART)

REPEATER OR SWITCHING NODE

AVERAGED Q—FACTOR MEASUREMENT CIRCUIT

RECEIVER

28

OPTICAL BANDPASS FILTER

SAMPLING MODULE

SIGNAL PROCESSING CIRCUIT — 30

RESULTS

26

ELECTRICAL PULSE GENERATOR

CLOCK OSCILLATOR — 22

—20

24

(TRANSMISSION LINE)

*FIG.2*

(PRIOR ART)

EP 1 955 453 B1

*FIG.3A*

*FIG.3B*

*FIG.3C*

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040218919 A
- US 20050152693 A
- US 20030011837 A